# EUROPEAN PATENT SPECIFICATION

(11) **EP 1 562 961 B1**
(45) Date of publication and mention of the grant of the patent: **25.10.2006**
(21) Application number: 03769254.8
(22) Date of filing: 30.10.2003
(51) Int. Cl.: C07F 5/02

(54) **HALO SULFONYL ARYL BORONATES**
HALOGENSULFONYLARYLBORONATE
HALO SULFONYL ARYL BORONATES

(30) Priority: 08.11.2002 DK 200201723
(43) Date of publication of application: 17.08.2005
(73) Proprietor: NOVO NORDISK A/S, 2880 Bagsvaerd (DK)
(72) Inventor: VEDSO, Per, DK-3500 Verlose (DK); OLESEN, Preben, Houlberg, DK-2400 Copenhagen NV (DK); HOEG-JENSEN, Thomas, DK-2930 Klampenborg (DK)
(86) International application number: PCT/DK2003/000738
(87) International publication number: WO 2004/041833

(56) References cited:
- WO-A-02/32884
- DATABASE ZCAPLUS [Online] DICESARE NICOLAS ET AL: "A new highly fluorescent probe for monosaccharides based on a donor-acceptor diphyenyloxazole" retrieved from STN Database accession no. 2001:768624 ZCAPLUS XP002272199 & CHEMICAL COMMUNICATIONS , vol. 19, 2001, pages 2022-2023, Cambridge, United Kingdom

## Description

### Field of the invention

The present invention relates to halo sulfonyl aryl boronates, to their preparation and to their use in organic synthesis.

### Background of the invention

Boronates, the anionic counterpart of boronic acids, are known to bind carbohydrates *via* reversible ester formation, with apparent displacement constants (K_{d}'s) of approximately 0.1-20 mM, which make them suitable for measuring glucose and other carbohydrates in the physiologically relevant range (Shinkai and Takeuchi, Trends Anal. Chem. 1996, 15, 188). However, since simple phenylboronic acid displays a pKa value of approximately 8.5, the formation of phenylboronates of carbohydrates is unfavoured under physiological conditions (pH 7.4). Accordingly, the binding of carbohydrates to phenylboronic acid is weak under physiological conditions. A stronger binding of carbohydrates at pH values around 7.4 can be achieved with boronic acids having a lower pKa, for example with phenyl boronic acids having electron-withdrawing groups in the aromatic ring (Eggert et al., J. Org. Chem. 1999, 64, 3846), or by introducing a 2-aminomethyl substituent, which locks boron in a tetrahedral state *via* B-N interaction (Bielecki, Eggert and Norrild, J. Chem. Soc., Perkin Trans 2 1999, 449).

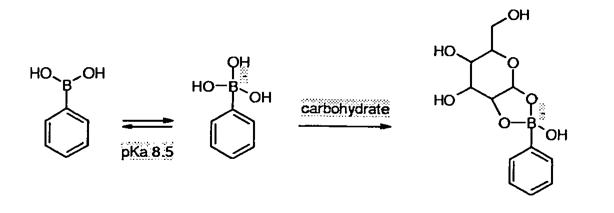

The sulfonyl functional group is strongly electron-withdrawing, and it can furthermore function as a handle, because e.g. sulfonate halides can be coupled to other molecules. However, although sulfonyl halides of aryl boronic acids would be useful intermediates in organic synthesis such compounds and methods for their preparation have not been described in literature. WO 2002/032884 describes methods for preparation of biphenyl isoxazole sulfonamides and intermediates thereof. DiCesare and Lakowicz in Chem. Comm. vol. 19 (2001), 2022-2023 describe fluorescent probes for monosaccharides based on a donor-acceptor diphenyloxazole.

### Summary of the invention

In one aspect, the present invention relates to sulfonyl halides of the general formula (I) 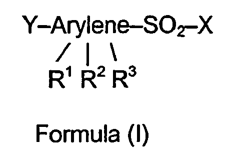 wherein Arylene designates a carbocyclic or heterocyclic, aromatic ring system comprising 1-3 rings;
R¹, R² and R³ are, independently, hydrogen, C₁₋₆alkyl, C₁₋₆alkoxy, halogen, nitro, cyano or phenyl;
X is fluoro, chloro or bromo; and
Y is a boroxine ring, or Y is a boronic acid group or an alkyl boronate group.

In one embodiment of the invention, Arylene designates a carbocyclic, monocyclic ring system, for example a benzene ring, to which R¹, R², R³, SO₂-X and Y are covalently bound.

In another embodiment, Arylene designates a carbocyclic, bicyclic ring system, for example naphthalene, to which R¹, R², R³, SO₂-X and Y are covalently bound.

In a further embodiment, Arylene designates a carbocyclic, tricyclic ring system, for example antracene, to which R¹, R², R³, SO₂-X and Y are covalently bound.

In a further embodiment, Arylene designates a heterocyclic, monocyclic ring system, for example pyridine or thiophene, to which R¹, R², R³, SO₂-X and Y are covalently bound.

In further embodiment, Arylene designates a heterocyclic, bicyclic ring system, for example quinoline, to which R¹, R², R³, SO₂-X and Y are covalently bound.

In further embodiment, Arylene designates a heterocyclic, tricyclic ring system, to which R¹, R², R³, SO₂-X and Y are covalently bound.

In a further embodiment of the invention, R¹, R² and R³ are all hydrogen.

In a further embodiment, two of R¹, R² and R³ are hydrogen while the third substituent is selected from the group consisting of C₁₋₆alkyl, C₁₋₆alkoxy, halogen, nitro, cyano and phenyl. In one particular form of this embodiment, the non-hydrogen substituent is fluoro, in another particular form it is chloro and in a third particular form it is bromo.

In a further embodiment, one of R¹, R² and R³ are hydrogen while the other two substituents are selected, independently, from the group consisting of C₁₋₆alkyl, C₁₋₆alkoxy, halogen, nitro, cyano and phenyl. In particular forms of this embodiment, the non-hydrogen substituents can, independently, be fluoro, chloro or bromo.

In a further embodiment of the invention, X is flouro.

In a further embodiment, X is chloro.

In a further embodiment, X is bromo.

In a further embodiment of the invention, Y is a boroxine moiety attached *via* a bond from Arylene to one of the boron atoms of a boroxine ring which ring has a group of the formula -Arylene(R¹)(R²)(R³)SO₂X, wherein Arylene, R¹, R², R³ and X are as defined above, at each of the other two boron atoms of the boroxine ring as well.

In a further embodiment, Y is a boronic acid group, that is, a group of the formula -B(OH)₂.

In a further embodiment, Y is a boronic acid ester group. In a particular form of this embodiment, the boronic acid ester is an ester derived from boronic acid and a diol.
One particular example of this form is shown in formula (a) below.
Another particular example of this form is shown in formula (b) below in which R is methyl, ethyl, propyl, isopropyl, butyl, isobutyl, *tert*-butyl or phenyl.
Another particular example of this form is shown in formula (c) below in which R is methyl, ethyl, propyl, isopropyl, butyl, isobutyl, *tert*-butyl or phenyl.
Another particular example of this form is shown in formula (d) below in which R is methyl, ethyl, propyl, isopropyl, butyl, isobutyl, *tert*-butyl or phenyl.
Another particular example of this form is shown in formula (e) below.
Another particular example of this form is shown in formula (f) below.
Another particular example of this form is shown in formula (g) below. 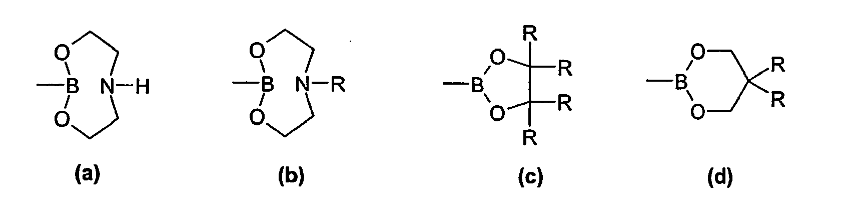 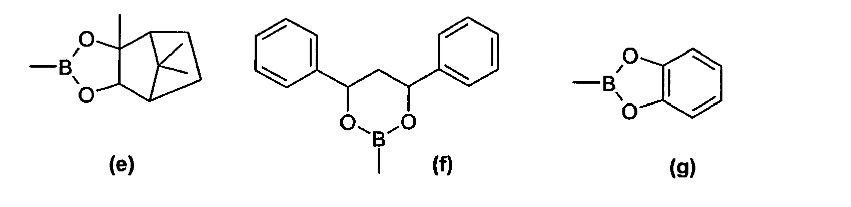 In another aspect, the present invention relates to a method for the preparation of the compounds of formula (I) as defined above. The method of preparation comprises the following steps:
a) reacting a compound of formula (II): 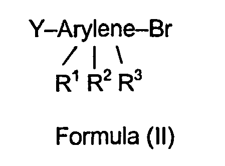 wherein R¹, R², R³ and Y are as defined above, in an inert solvent at a temperature below -75 °C with butyl lithium to form a lithiated intermediate of formula (III): 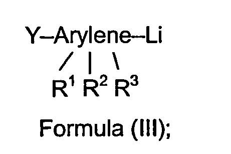
b) adding sulfur dioxide to the lithiated intermediate of formula (III) to form the corresponding lithium sulfinate of formula (IV): 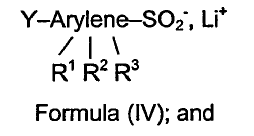
c) converting the lithium sulfinate of formula (IV) to the corresponding sulfonylchloride of formula (I) by treating the lithium sulfinate with an oxidizing chlorinating agent such as *N*-chlorosuccinimide (NCS) or 1,3-dichloro-5,5-dimethylhydantoin or to the corresponding sulfonylbromide by treating the lithium sulfinate with an oxidizing brominating agent such as *N*-bromosuccinimide.

As an alternative to step b) and c), the lithiated intermediate of formula (III) can be sulfonylated with sulfur trioxide and then fluorinated with sulfur tetrafluoride or diethylamino sulfur trifluoride to produce the corresponding sulfonylfluoride of formula (I), or the lithiated intermediate of formula (III) can be sulfonylated with sulfur trioxide and chlorinated with thionyl chloride, sulfuryl chloride, phosphortrichloride, phosphorpentachloride or phosphoroxychloride to produce the corresponding sulfonylchloride of formula (I).

In a further aspect, the present invention relates to the use of the compounds of formula (I) as building blocks in organic chemistry. Thus, on reaction with ammonia, with primary amines or with secondary amines the compounds of formula (I) will form the corresponding amides.

### Detailed description of the Invention

In the preparation of the compounds of the invention, halo aryl boronic acids, preferable in the form of their N-methyl-diethanolamine esters, are dissolved in an inert solvent and cooled to low temperature, preferably -90 to -105 °C. Examples of suitable solvents for the reaction are tetrahydrofuran, diethylether, dioxane in mixture with a solvent having a low freezing point, diglyme, *tert-*butyl-methylether, di*-tert-*butylether, tetrahydropyran, and mixtures thereof. When choosing the solvent or solvent mixture, the freezing point of the solvent or solvent mixture must be taken into consideration so that it does not freeze at the temperature at which the reaction is carried out.

While a temperature between -90 °C and -105 °C may be convenient in many cases it is of course possible to work at higher temperatures, for example -75 °C or even -60 °C and lower temperatures, for example -120 °C or -150 °C.

After butyl lithium in hexane has been added to the solution of the starting material, the resulting lithiated aryl is quenched by addition of sulfur dioxide to form the corresponding sulfinate or sulfur trioxide to form the corresponding sulfonate. The lithium sulfinate precipitates and is collected by filtration. The sulfinate is oxidized and halogenated, preferably in a simultaneous process by treatment with an *N*-chloro compound, such as 1,3-dichloro-5,5-dimethylhydantoin, or by treatment with *N*-bromosuccinimide to form the sulfonylbromide of formula (I). Alternative halogenating agents are thionyl chloride, sulfuryl chloride, phosphortrichloride, phosphorpentachloride, phosphoroxychloride, sulfur tetrafluoride and diethylamino sulfur trifluoride which can be used to halogenate the lithium sulfonates.

The halo sulfonyl phenyl boronates can be isolated by aqueous work-up, or used *in situ* for coupling to amines or other nucleophiles.

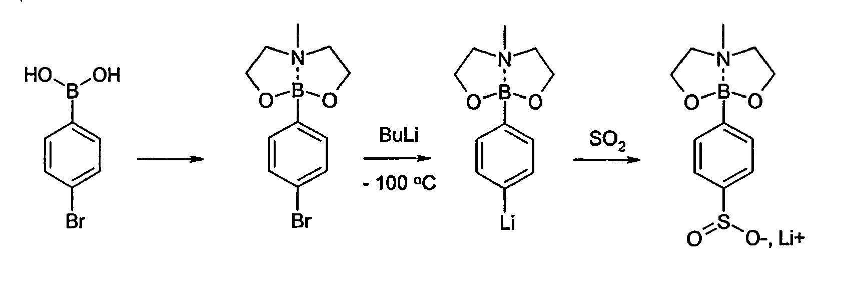

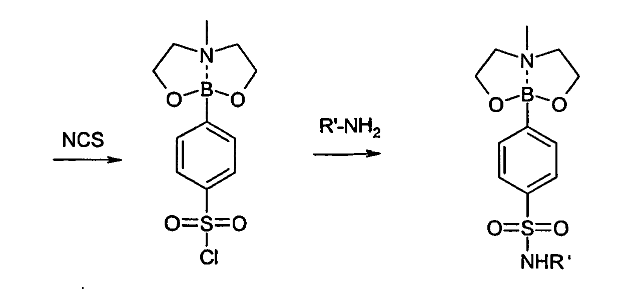

Sulfonylamide aryl boronates prepared by the described route are emendable to cross-coupling reactions (A. Suzuki, Journal of Organometallic Chemistry 1999, 576, 147) as exemplified by Suzuki coupling with formation of a biphenyl compound.

### EXAMPLES

Acronyms used for chemicals, groups and commercially available chemicals:
- DCl: Deuterium chloride
- CDCl₃: Deuterochloroform
- DMSO: Dimethylsulfoxide

### General Methods and Materials

All reactions involving air-sensitive reagents were performed under nitrogen using syringe-septum cap techniques. The glassware was flame dried prior to use. MgSO₄ was used to dry solutions. Solvents were removed *in vacuo* by rotatory evaporation. Melting points were recorded on a Büchi 535 melting point apparatus and are uncorrected. NMR spectra were recorded on a Bruker AMX 400 or a Bruker DRX 300 instrument with tetramethylsilane (TMS) as internal standard. All solvents and reagents were obtained from commercial sources and used without further purification. Butyl lithium was titrated prior to use.

### Example 1

### Lithium 4-sulfinyl-phenylboronic acid N-methyl-diethanolamine ester

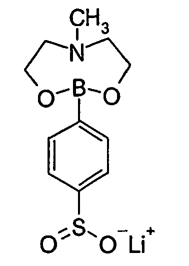

To a stirred solution of 4-bromobenzeneboronic acid *N*-methyldiethanolamine ester (6.62 g, 23.4 mmol) in dry tetrahydrofuran (200 mL) was added drop-wise 1.43 M solution in hexanes of n-BuLi (14.8 mL, 21.0 mmol) over a 5-min period at -105 °C, using an ether-liquid nitrogen bath. The mixture was stirred at -105 °C for 15 min. Then, gaseous sulfur dioxide (ca. 7 g) was added causing an immediate precipitation and a roughly 40 °C increase in the temperature of the reaction mixture. The mixture was allowed to warm to room temperature and stirred for 1 h. The precipitated lithium sulfinate was isolated by filtration under N₂ (g), washed with tetrahydrofuran (100 mL) and dried *in vacuo* providing 5.74 g (99%) of the title compound as a solid: mp > 230 °C; ¹H NMR (DMSO-*d*₆): δ7.43 (d, 2H), 7.35 (d, 2H), 3.97-3.83 (m, 4H), 3.26-3.19 (m, 2H), 2.98-2.89 (m, 2H), 2.17 (s, 3H).

### Example 2

### Lithium 3-sulfinyl-phenylboronic acid N-methyl-diethanolamine ester

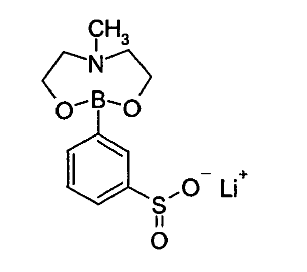

To a stirred solution of 3-bromobenzeneboronic acid *N*-methyldiethanolamine ester (3.31 g, 11.7 mmol) in dry tetrahydrofuran (100 mL) was added drop-wise 1.43 M solution in hexanes of n-BuLi (7.4 mL, 10.5 mmol) over a 3-min period at -78 °C. The mixture was stirred at -78 °C for 15 min. Then, gaseous sulfur dioxide (ca. 5 g) was added causing an immediate precipitation and a roughly 40 °C increase in the temperature of the reaction mixture. The mixture was allowed to warm to room temperature and stirred for 1 h. The precipitated lithium sulfinate was isolated by filtration under N₂ (g), washed with tetrahydrofuran (50 mL) and dried *in vacuo* providing 2.81 g (97%) of the title compound as a solid: ¹H NMR (DMSO-*d*₆): δ7.66 (s, 1H), 7.39-7.32 (m, 2H), 7.17 (t, 1 H), 3.97-3.84 (m, 4H), 3.27-3.21 (m, 2H), 2.97-2.89 (m, 2H), 2.18 (s, 3H).

### Example 3

### 4-Chlorosulfonyl-phenylboronic acid N-methyl-diethanolamine ester

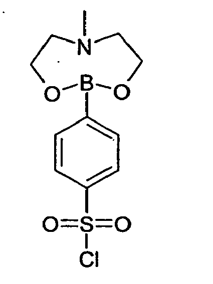

Lithium 4-sulfinyl-phenylboronic acid *N*-methyl-diethanolamine ester (138 mg, 0.5 mmol) was suspended in CH₂Cl₂ (1 mL). *N*-Chlorosuccinimide (73 mg, 0.55 mmol) was added and the mixture was stirred at room temperature for 1 h. The organic solution was washed three times with ice cold water and then dried and evaporated to give 80 mg (52%) of the title compound as coulorless crystals: ¹H NMR (CDCl₃): δ7.94 (d, 2H), 7.89 (d, 2H), 4.29-4.14 (m, 4H), 3.28 (ddd, 2H), 3.06 (ddd, 2H), 2.36 (s, 3H).

### Example 4

### Lithium 4-sulfinyl-2-fluorophenylboronic acid N-methyl-diethanolamine ester

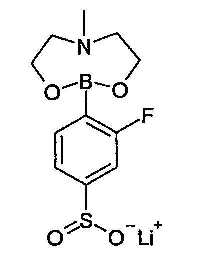

To a stirred solution of 4-bromo-2-fluorobenzeneboronic acid *N*-methyldiethanolamine ester (2.64 g, 8.74 mmol) in dry tetrahydrofuran (80 mL) was added drop-wise 1.6 M solution in hexanes of n-BuLi (4.91 mL, 7.85 mmol) over a 2-min period at -78 °C. The mixture was stirred at -78 °C for 15 min. Then, gaseous sulfur dioxide (ca. 3 g) was added causing an immediate precipitation and a roughly 40 °C increase in the temperature of the reaction mixture. The mixture was allowed to warm to room temperature and was stirred for 1 h. The precipitated lithium sulfinate was isolated by filtration under N₂ (g), washed with tetrahydrofuran (50 mL) and dried *in vacuo* providing 2.19 g (95%) of the title compound as a solid: ¹H NMR (DMSO-*d*₆): δ7.50 (t, 1H), 7.14 (d, 1H), 7.02 (d, 1 H), 3.93-3.81 (m, 4H), 3.28-3.22 (m, 2H), 3.04-2.97 (m, 2H), 2.39 (s, 3H).

### Example 5

### 4-Phenethylsulfamoylbenzeneboronic acid

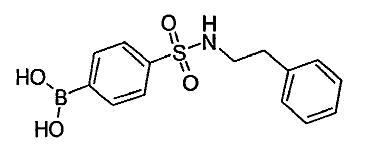

Lithium 4-sulfinyl-phenylboronic acid *N*-methyl-diethanolamine ester (275 mg, 1.0 mmol) was suspended in CH₂Cl₂ (2 mL). *N*-Chlorosuccinimide (147 mg, 1.10 mmol) was added and the mixture was stirred at room temperature for 1 h. 2-Phenylethylamine (0.265 mL, 2.1 mmol) was added and the reaction mixture was stirred for 1 h at room temperature. Then, Dowex 50WX2-400 cation exchange resin (about 1 g) was added and the mixture was stirred for further 1 h. The resin was removed by filtration and extracted with CH₂Cl₂:MeOH (9:1). To the combined organic filtrates was added 1N NaOH and the aqueous phase was washed with CH₂Cl₂. The aqueous phase was acidified with 1 N HCl and the resulting crystals were isolated by filtration to give 154 mg (50%) of the title compound: ¹H NMR (DMSO-d₆+DCl): δ 7.95 (d, 2H), 7.75 (d, 2H), 7.29-7.13 (m, 5H), 2.94 (t, 2H), 2.67 (t, 2H).

### Example 6

### 4-Benzylsulfamoylbenzeneboronic acid

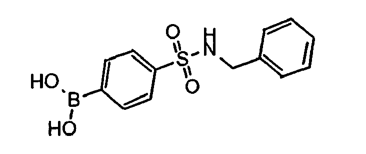

Lithium 4-sulfinyl-phenylboronic acid *N*-methyl-diethanolamine ester (275 mg, 1.0 mmol) was suspended in CH₂Cl₂ (2 mL). *N*-Chlorosuccinimide (147 mg, 1.10 mmol) was added and the mixture was stirred at room temperature for 1 h. Benzylamine (0.23 mL, 2.1 mmol) was added and the reaction mixture was stirred for 1 h at room temperature.Then, Dowex 50WX2-400 cation exchange resin (about 1 g) was added and the mixture was stirred for further 1 h. The resin was removed by filtration and extracted with CH₂Cl₂:MeOH (9:1). To the combined organic filtrates was added 1 N NaOH and the aqueous phase was washed with CH₂Cl₂. The aqueous phase was acidified with 1 N HCl and the resulting crystals were isolated by filtration to give 163 mg (56%) of the title compound: ¹H NMR (DMSO-*d*₆+DCl): δ7.95 (d, 2H), 7.78 (d, 2H), 7.32-7.19 (m, 5H), 3.97 (s, 2H).

### Example 7

### 4-(Methylphenethylsulfamoyl)benzeneboronic acid

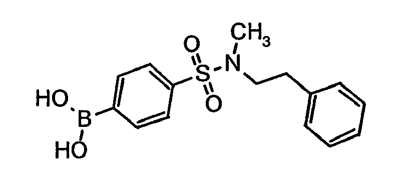

Lithium 4-sulfinyl-phenylboronic acid *N*-methyl-diethanolamine ester (275 mg, 1.0 mmol) was suspended in CH₂Cl₂ (2 mL). *N*-Chlorosuccinimide (147 mg, 1.10 mmol) was added and the mixture was stirred at room temperature for 1 h. Methylphenylethylamine (0.305 mL, 2.1 mmol) was added and the reaction mixture was stirred for 1 h at room temperature. Then, Dowex 50WX2-400 cation exchange resin (about 1 g) was added and the mixture was stirred for further 1 h. The resin was removed by filtration and extracted with CH₂Cl₂:MeOH (9:1). To the combined organic filtrates was added 1 N NaOH and the aqueous phase was washed with CH₂Cl₂. The aqueous phase was acidfied with 1 N HCl and the resulting crystals were isolated by filtration to give 196 mg (61%) of the title compound: ¹H NMR (DMSO-*d*₆+DCl):δ 7.99 (d, 2H), 7.71 (d, 2H), 7.32-7.19 (m, 5H), 3.19 (t, 2H), 2.77 (t, 2H), 2.69 (s, 3H).

### Example 8

### 3-Benzylsulfamoylbenzeneboronic acid

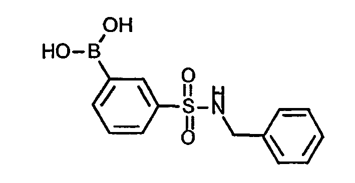

Lithium 3-sulfinyl-phenylboronic acid *N*-methyl-diethanolamine ester (275 mg, 1.0 mmol) was suspended in CH₂Cl₂ (2 mL). *N*-Chlorosuccinimide (147 mg, 1.10 mmol) was added and the mixture was stirred at room temperature for 1 h. Benzylamine (0.23 mL, 2.1 mmol) was added and the reaction mixture was stirred for 1 h at room temperature. Then, Dowex 50WX2-400 cation exchange resin (about 1 g) was added and the mixture was stirred for further 1 h. The resin was removed by filtration and extracted with CH₂Cl₂:MeOH (9:1). To the combined organic filtrates was added 1N NaOH and the aqueous phase was washed with CH₂Cl₂. The aqueous phase was acidified with 1 N HCl and the resulting crystals were isolated by filtration to give 107 mg (37%) of the title compound: ¹H NMR (DMSO-*d*₆+DCl): δ 8.24 (s, 1 H), 8.03 (d, 1 H), 7.85 (dt, 1 H), 7.56 (t, 1H), 7.31-7.21 (m, 5H), 3.96 (s, 2H).

### Example 9

### 3-(Methylphenethylsulfamoyl)benzeneboronic acid

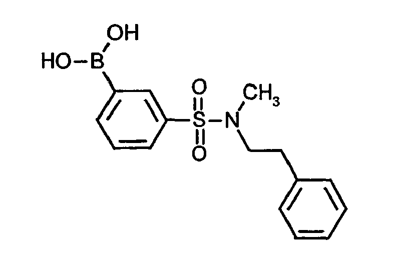

Lithium 3-sulfinyl-phenylboronic acid *N*-methyl-diethanolamine ester (225 mg, 0.82 mmol) was suspended in CH₂Cl₂ (2 mL). *N*-Chlorosuccinimide (131 mg, 0.98 mmol) was added and the mixture was stirred at room temperature for 1 h. Methylphenylethylamine (0.24 mL, 1.65 mmol) was added and the reaction mixture was stirred for 1 h at room temperature. Then, Dowex 50WX2-400 cation exchange resin (about 1 g) was added and the mixture was stirred for further 1 h. The resin was removed by filtration and extracted with CH₂Cl₂:MeOH (9:1). To the combined organic filtrates was added 1N NaOH and the aqueous phase was washed with CH₂Cl₂ and then acidified with 1N HCl. The aqueous phase was extracted with CH₂Cl₂:MeOH (9:1), dried and then evaporated to give 180 mg (69%) of the title compound as an oil which slowly crystallised: ¹H NMR (DMSO-*d*₆+DCl): δ 8.17 (s, 1 H), 8.08 (d, 1 H), 7.78 (d, 1 H), 7.60 (t, 1H), 7.33-7.19 (m, 5H), 3.18 (t, 2H), 2.77 (t, 2H), 2.69 (s, 3H).

### Example 10

### 3-(Butylmethylsulfamoyl)benzeneboronic acid

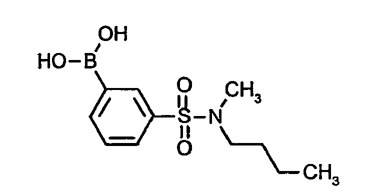

Lithium 3-sulfinyl-phenylboronic acid *N*-methyl-diethanolamine ester (225 mg, 0.82 mmol) was suspended in CH₂Cl₂ (2 mL). *N*-Chlorosuccinimide (131 mg, 0.98 mmol) was added and the mixture was stirred at room temperature for 1 h. *N*-Methylbutylamine (0.19 mL, 1.62 mmol) was added and the reaction mixture was stirred for 1 h at room temperature. Then, Dowex 50WX2-400 cation exchange resin (about 1 g) was added and the mixture was stirred for further 1 h. The resin was removed by filtration and extracted with CH₂Cl₂:MeOH (9:1). The combined organic filtrates were evaporated, 1 N NaOH was added and the aqueous phase was washed with CH₂Cl₂ and then acidified with 1N HCl. The aqueous phase was extracted with CH₂Cl₂:MeOH (9:1), the extract was dried and then solvent was evaporated to leave 151 mg (68%) of the title compound as an oil which slowly crystallised: ¹H NMR (DMSO-*d*₆+DCl): δ8.16 (s, 1H), 8.08 (d, 1 H), 7.79 (d, 1 H), 7.61 (t, 1 H), 2.92 (t, 2H), 2.63 (3, 3H), 1.43 (p, 2H), 1.27 (sextet, 2H), 0,87 (t, 3H).

### Example 11

### 3-(Piperidine-1-sulfonyl)benzeneboronic acid

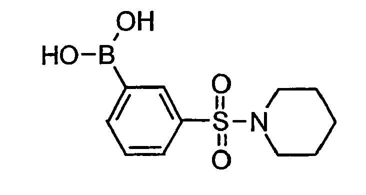

Lithium 3-sulfinyl-phenylboronic acid *N*-methyl-diethanolamine ester (225 mg, 0.82 mmol) was suspended in CH₂Cl₂ (2 mL). *N*-Chlorosuccinimide (131 mg, 0.98 mmol) was added and the mixture was stirred at room temperature for 1 h. Piperidine (0.17 mL, 1.72 mmol) was added and the reaction mixture was stirred for 1 h at room temperature. Then, Dowex 50WX2-400 cation exchange resin (about 1 g) was added and the mixture was stirred for further 1 h. The resin was removed by filtration and extracted with CH₂Cl₂:MeOH (9:1). The combined organic filtrates were evaporated added 1 N NaOH and the aqueous phase was washed with CH₂Cl₂ and then acidified with 1 N HCl. The aqueous phase was extracted with CH₂Cl₂:MeOH (9:1), dried and then evaporated to give 167 mg (76%) of the title compound as an oil which slowly crystallised: ¹H NMR (DMSO-*d*₆+DCl): δ8.12 (s, 1 H), 8.10 (d, 1 H), 7.72 (d, 1 H), 7.63 (t, 1 H), 2.86 (t, 4H), 1.57 (p, 4H), 1.35 (bs, 2H).

### Example 12

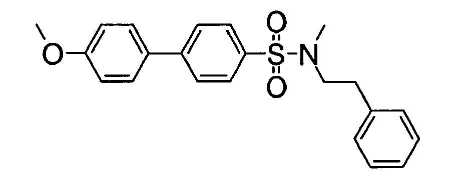

3-(Butylmethylsulfamoyl)benzeneboronic acid (100 mg, 0.313 mmol), KF (60 mg, 1.03 mmol), Pd₂(dibenzylidineacetone)₃ (9 mg, 0.01 mmol) and Pd(P(*t*-Bu)₃)₂ (10 mg, 0.02 mmol) were added to a Schlenk tube under nitrogen. The Schlenk tube was evacuated and refilled with nitrogen five times. Next, 4-bromoanisol (64 mg, 0.34 mmol) in tetrahydrofuran (2 mL) was added. The reaction mixture was stirred at room temperature for 16 h, quenched with aqueous NH₄Cl, and extracted with CH₂Cl₂, dried and evaporated. Flash chromatography (ethylacetate-heptane 1:4) produced 105 mg (88%) of the title compound as light yellow crystals: mp 97.5 °C; ¹H NMR (CDCl₃): δ 7.77 (d, 2H), 7.64 (d, 2H), 7.52 (d, 2H), 7.38 (t, 2H),7.24-7.17 (m, 3H), 6.98 (d, 2H), 3.84 (s, 3H), 3.28 (t, 2H), 2.87 (t, 2H), 2.78 (s, 3H); ¹³C NMR (CDCl₃): δ159.95, 144.87, 138.19, 135.44, 131.46, 128.71, 128.49, 128.29, 127.74, 126.92, 126.47, 114.40, 55.27, 51.73, 35.09, 34.74.

### Example 13

### tert-Butyl 4-amino-N-(4-pinacolboronophenylsulfonyl))butyrate

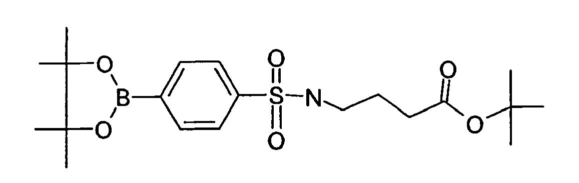

To a suspension of lithium 4-sulfinyl-phenylboronic acid *N*-methyl-diethanolamine ester (0.55 g, 2 mmol) in dichloromethane (10 ml) *N*-chlorosuccinimide (0.3 g, 2.2 mmol) was added. The reaction mixture was stirred at room temperature for 1 hour. Then, *N,N-*diisopropylethylamine (0.23 g, 2.2 mmol) and 4-aminobutyric acid tert-butyl ester hydrochloride (0.43 g, 2.2 mmol) were added. The reaction mixture was stirred at room temperature for another 1 hour. The organic phase was washed with 1 N hydrochloric acid solution followed by water and dried over sodium sulfate. The organic phase was filtered and pinacole (0.26 g, 2.2 mmole) was added. The reaction mixture was stirred at room temperature for 2 hours, and the organic phase was washed twice with water, dried over sodium sulfate and evaporated. The title compound was isolated as oil in 508 mg, 60 % yield
¹H NMR (300 MHz, CDCl₃) δ ppm 1.36 (s, 12 H) 1.42 (s, 9 H) 1.75 (q, J=6.78 Hz, 2 H) 2.25 (t, J=6.97 Hz, 2 H) 2.99 (q, J=6.66 Hz, 2 H) 4.71 (t, J=6.03 Hz, 1 H) 7.83 (d, J=8.29 Hz, 2 H) 7.93 (d, 2 H).

### Example 14

### Succinimidyl N-(4-pinacolborono-phenylsulfonyl)-4-amino-butyrate

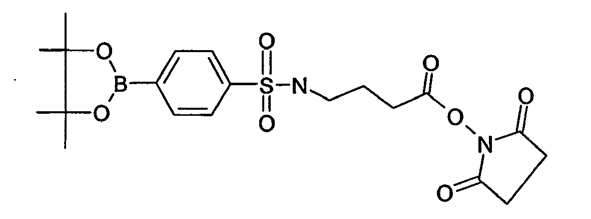

*tert*-Butyl 4-amino-*N*-(4-pinacolboronophenylsulfonyl))-butyrate (360 mg, 0.90 mmol) was dissolved in trifluoroacetic acid (8 ml) with cooling to 0 °C. The reaction mixture was slowly heated to room temperature and stirred at this temperature for 1 hour. The reaction mixture was evaporated and the crude material was triturated with toluene. The crystalline material was filtered, dried and dissolved in dry dichloromethane. *N-*hydroxysuccinimide (104 mg, 0.9 mmmol) and *N,N'*-dicyclohexylcarbodiimide (185 mg, 0.9 mmole) were added and the reaction mixture was stirred at room temperature for 2 hours. The reaction mixture was filtered and evaporated. The crude material was redissolved in ether and filtered to remove *N,N'*-dicyclohexylurea. The ether solution was evaporated to give the title compound in 470 mg, 87 % yield.
¹H NMR (300 MHz, CDCl₃) δ ppm 1.35 (s, 12 H) 1.95 (m, 2 H) 2.68 (t, 2 H) 2.84 (br. s., 4 H) 3.08 (m, 2 H) 4.91 (t, 1 H) 7.84 (d, J=8.67 Hz, 2 H) 7.94 (d, 2 H).

### Example 15

### tert-Butyl N-(4-pinylboronophenylsulfonyl))glycinate

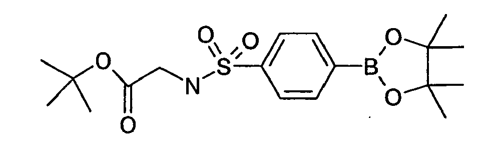

The title compound was prepared by the same procedure as described in Example 13 starting from lithium 4-sulfinyl-phenylboronic acid *N*-methyl-diethanolamine ester and *tert*-butyl glycinate hydrochloride. Yield 55 %.
¹H NMR (300 MHz, CDCl₃) δ ppm 1.34 (s, 21 H) 3.66 (d, J=5.65 Hz, 2 H) 5.02 (t, J=5.28 Hz, 1 H) 7.84 (d, J=8.67 Hz, 2 H) 7.94 (d, 2 H)

### Example 16

### Succinimidyl N-(4-pinylboronophenylsulfonyl))glycinate

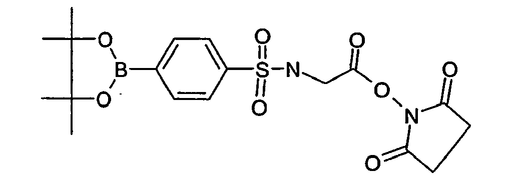

The title compound was prepared by the procedure described in Example 15, starting from *tert*-butyl *N*-(4-pinylboronophenylsulfonyl))glycinate. Yield 72 %
¹H NMR (300 MHz, CDCl₃) δ ppm 1.36 (s, 12 H) 2.81 (s, broad, 4 H) 4.19 (d, J=6.03 Hz, 2 H) 5.18 (t, 1 H) 7.85 (d, J=8.29 Hz, 2 H) 7.95 (d, 2 H)

## Claims

1. A sulfonyl halide of the general formula (I) 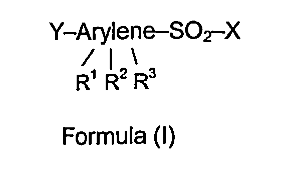 wherein Arylene designates a carbocyclic or heterocyclic, aromatic ring system comprising 1-3 rings;
R¹, R² and R³ are, independently, hydrogen, C₁₋₆alkyl, C₁₋₆alkoxy, halogen, nitro, cyano or phenyl;
X is fluoro, chloro or bromo; and
Y is a boroxine moiety attached *via* a bond from Arylene to one of the boron atoms of a boroxine ring which ring has a group of the formula -Arylene(R¹)(R²)(R³)SO₂X, wherein Arylene, R¹, R², R³ and X are as defined above, at each of the other two boron atoms of the boroxine ring, or Y is a boronic acid group or a boronic ester group.

2. A compound according to claim 1 wherein Arylene is 1,4-phenylene, 1,3-phenylene or 1,2-phenylene.

3. A compound according to claim 1 wherein R¹, R² and R³ are hydrogen.

4. A compound according to claim 1 wherein X is chloro.

5. A compound according to claim 1 wherein Y is a boronic acid group.

6. A compound according to claim 1 wherein Y is a boronic ester group selected among the options (a) - (g) below wherein the substituent R, when present, is selected from the group consisting of methyl, ethyl, propyl, isopropyl, butyl, isobutyl, *tert*-butyl and phenyl.

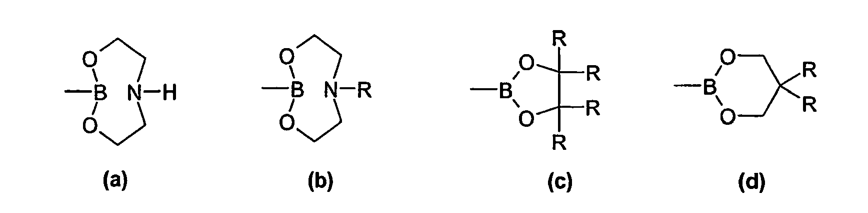

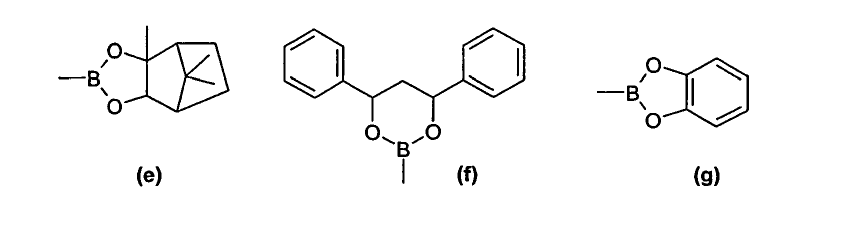

7. A method of providing a compound of formula (I) which comprises the following steps:
a) reacting a compound of formula (II): 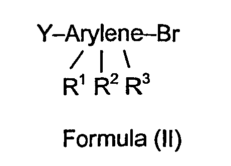 wherein R¹, R², R³ and Y are as defined in claim 1, in an inert solvent at a temperature below -75 °C with butyl lithium to form a lithiated intermediate of formula (III): 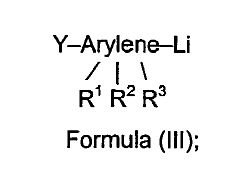
b) adding sulfur dioxide to the lithiated intermediate of formula (III) to form the corresponding lithium sulfinate of formula (IV): 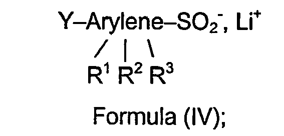 and converting the lithium sulfinate of formula (IV) to the corresponding sulfonylchloride of formula (I) by treating the lithium sulfinate with *N*-chlorosuccinimide or 1,3-dichloro-5,5-dimethylhydantoin or converting the lithium sulfinate of formula (IV) to the corresponding sulfonylbromide of formula (I) by treating the lithium sulfinate with *N-*bromosuccinimide; or
c) adding sulfur trioxide to the lithiated intermediate of formula (III) to form the corresponding lithium sulfonate of formula (V): 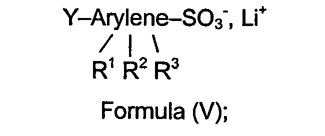 and converting the lithium sulfonate of formula (V) to the corresponding sulfonylflouride of formula (I) by treating the lithium sulfonate with sulfur tetrafluoride or diethylamino sulfur trifluoride or to the corresponding sulfonylchloride of formula (I) by treating the lithium sulfonate with thionyl chloride, sulfuryl chloride, phosphortrichloride, phosphorpentachloride or phosphoroxychloride.

8. A method according to claim 7 wherein the inert solvent used in step a) is selected from the group of solvents comprising tetrahydrofuran, diethylether, dioxane in mixture with a solvent having a low freezing point, diglyme, *tert*-butyl-methylether, di-*tert*-butylether, tetrahydropyran, and mixtures thereof.

9. A method according to claim 7 wherein the temperature at which step a) is carried out is between -75 °C and -150 °C.

10. A method according to claim 7 wherein a lithium sulfinate of formula (IV) is converted into the corresponding sulfonylfluoride of formula (I) by treating the lithium sulfinate with sulfur tetrafluoride or diethylamino sulfur trifluoride.

11. A method according to claim 7 wherein a lithium sulfinate of formula (IV) is converted into the corresponding sulfonylchloride of formula (I) by treating the lithium sulfinate with N-chlorosuccinimide or 1,3-dichloro-5,5-dimethylhydantoin.

12. A method according to claim 7 wherein a lithium sulfonate of formula (V) is converted into the corresponding sulfonylchloride of formula (I) by treating the lithium sulfonate of formula (V) with thionyl chloride, sulfuryl chloride, phosphortrichloride, phosphorpentachloride or phosphoroxychloride.

13. A method according to claim 7 wherein a lithium sulfinate of formula (IV) is converted into the corresponding sulfonylbromide of formula (I) by treating the lithium sulfinate with N-bromosuccinimide.

14. Use of a compound of formula (I) in the preparation of a sulfonamide.

15. Use of a sulfonamide of claim 14 in Suzuki coupling with formation of a biaryl.

## Patentansprüche

1. Sulfonylhalogenid der allgemeinen Formel (I) 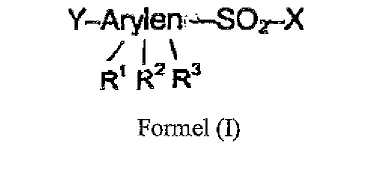 wobei Arylen ein carbocyclisches oder heterocyclisches aromatisches Ringsystem, umfassend 1-3 Ringe, bezeichnet;
R¹, R² und R³ unabhängig voneinander Wasserstoff, C₁₋₆-Alkyl, C₁₋₆-Alkoxy, Halogen, Nitro, Cyano oder Phenyl sind;
X Fluor, Chlor oder Brom ist; und
Y eine Boroxineinheit ist, die über eine Bindung von Arylen zu einem der Boratome eines Boroxinrings angelagert ist, wobei der Ring eine Gruppe der Formel -Arylen(R¹)(R²)(R³)SO₂X, wobei Arylen, R¹, R², R³ und X wie vorstehend definiert sind, an jedem der anderen beiden Boratome des Boroxinrings aufweist, oder Y eine Borsäure- oder eine Borsäureestergruppe ist.

2. Verbindung nach Anspruch 1, wobei Arylen 1,4-Phenylen, 1,3-Phenylen oder 1,2-Phenylen ist.

3. Verbindung nach Anspruch 1, wobei R¹, R² und R³ Wasserstoff sind.

4. Verbindung nach Anspruch 1, wobei X Chlor ist.

5. Verbindung nach Anspruch 1, wobei Y eine Borsäuregruppe ist.

6. Verbindung nach Anspruch 1, wobei Y eine aus den nachstehenden Möglichkeiten (a)-(g) ausgewählte Borsäureestergruppe ist, wobei der Substituent R, falls vorliegend, ausgewählt ist aus der Gruppe, bestehend aus Methyl, Ethyl, Propyl, Isopropyl, Butyl, Isobutyl, tert-Butyl und Phenyl.

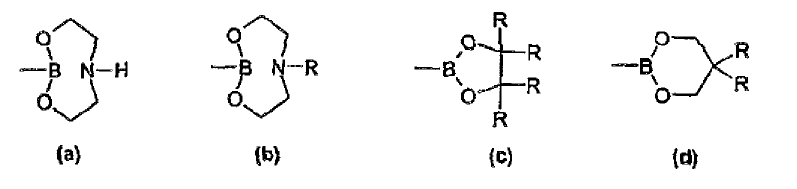

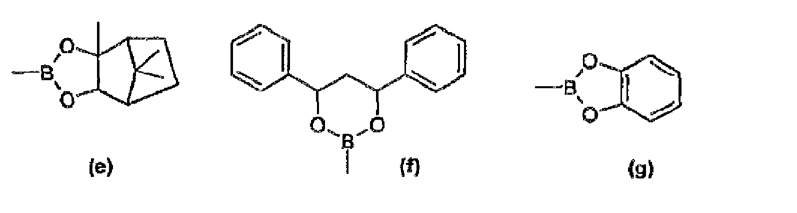

7. Verfahren zum Bereitstellen einer Verbindung der Formel (I), das die folgenden Schritte umfasst:
a) Umsetzen einer Verbindung der Formel (II) 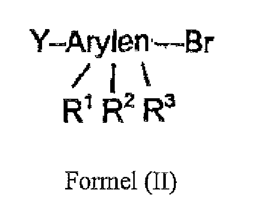 wobei R¹, R², R³ und Y wie in Anspruch 1 definiert sind, in einem inerten Lösungsmittel bei einer Temperatur unter -75°C mit Butyllithium zum Bilden einer lithiierten Zwischenverbindung der Formel (III): 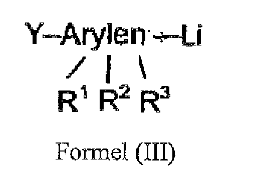
b) Zugabe von Schwefeldioxid zu der lithiierten Zwischenverbindung der Formel (III) zum Bilden des entsprechenden Lithiumsulfinats der Formel (IV): 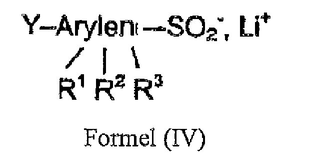 und Umwandeln des Lithiumsulfinats der Formel (IV) zu dem entsprechenden Sulfonylchlorid der Formel (I) durch Behandeln des Lithiumsulfinats mit N-Chlorsuccinimid oder 1,3-Dichlor-5,5-dimethylhydantoin oder Umwandeln des Lithiumsulfinats der Formel (IV) zu dem entsprechenden Sulfonylbromid der Formel (I) durch Behandeln des Lithiumsulfinats mit N-Bromsuccinimid; oder
c) Zugabe von Schwefeltrioxid zu der lithiierten Zwischenverbindung der Formel (III) zum Bilden des entsprechenden Lithiumsulfonats der Formel (V): 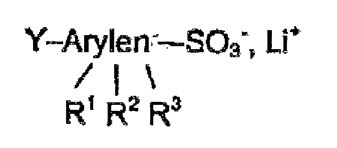 und Umwandeln des Lithiumsulfonats der Formel (V) zu dem entsprechenden Sulfonylfluorid der Formel (I) durch Behandeln des Lithiumsulfonats mit Schwefeltetrafluorid oder Diethylaminoschwefeltrifluorid oder zu dem entsprechenden Sulfonylchlorid der Formel (I) durch Behandeln des Lithiumsulfonats mit Thionylchlorid, Sulfurylchlorid, Phosphortrichlorid, Phosphorpentachlorid oder Phosphoroxychlorid.

8. Verfahren nach Anspruch 7, wobei das in Schritt a) verwendete inerte Lösungsmittel ausgewählt ist aus der Gruppe von Lösungsmitteln, umfassend Tetrahydrofuran, Diethylether, Dioxan in Gemisch mit einem Lösungsmittel mit einem niedrigen Gefrierpunkt, Diglyme, tert-Butylmethylether, Di-tert-butylether, Tetrahydropyran und Gemischen davon.

9. Verfahren nach Anspruch 7, wobei die Temperatur, bei welcher Schritt a) durchgeführt wird, zwischen -75 und -150°C liegt.

10. Verfahren nach Anspruch 7, wobei ein Lithiumsulfinat der Formel (IV) zu dem entsprechenden Sulfonylfluorid der Formel (I) durch Behandeln des Lithiumsulfinats mit Schwefeltetrafluorid oder Diethylaminoschwefeltrifluorid umgewandelt wird.

11. Verfahren nach Anspruch 7, wobei ein Lithiumsulfinat der Formel (IV) zu dem entsprechenden Sulfonylchlorid der Formel (I) durch Behandeln des Lithiumsulfinats mit N-Chlorsuccinimid oder 1,3-Dichlor-5,5-dimethylhydantoin umgewandelt wird.

12. Verfahren nach Anspruch 7, wobei ein Lithiumsulfonat der Formel (V) zu dem entsprechenden Sulfonylchlorid der Formel (I) durch Behandeln des Lithiumsulfonats der Formel (V) mit Thionylchlorid, Sulfurylchlorid, Phosphortrichlorid, Phosphorpentachlorid oder Phosphoroxychlorid umgewandelt wird.

13. Verfahren nach Anspruch 7, wobei ein Lithiumsulfinat der Formel (IV) in das entsprechende Sulfonylbromid der Formel (I) durch Behandeln des Lithiumsulfinats mit N-Bromsuccinimid umgewandelt wird.

14. Verwendung einer Verbindung der Formel (I) bei der Herstellung eines Sulfonamids.

15. Verwendung eines Sulfonamids nach Anspruch 14 bei der Suzuki-Kupplung unter Bilden eines Biaryls.

## Revendications

1. Halogénure de sulfonyle de formule générale (I) 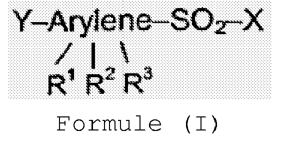 dans laquelle "arylène" désigne un système cyclique aromatique carbocyclique ou hétérocyclique comprenant 1-3 cycles ;
R¹, R² et R³ sont indépendamment l'hydrogène, un halogène ou un radical alkyle en C₁₋₆, alcoxy en C₁₋₆, nitro, cyano ou phényle ;
X est un radical fluoro, chloro ou bromo ; et
Y est un fragment boroxine rattaché via une liaison provenant de l'arylène à l'un des atomes de bore d'un cycle boroxine, lequel cycle a un groupe de formule - arylène(R¹)(R²) (R³)SO₂X, où arylène, R¹, R² et R³ sont tels que définis ci-dessus, à chacun des deux autres atomes de bore du cycle boroxine, ou bien Y est un groupe acide boronique ou un groupe ester boronate.

2. Composé selon la revendication 1, dans lequel l'arylène est le 1,4-phénylène, le 1,3-phénylène ou le 1,2-phénylène.

3. Composé selon la revendication 1, dans lequel R¹, R² et R³ sont des hydrogènes.

4. Composé selon la revendication 1, dans lequel X est le chlore.

5. Composé selon la revendication 1, dans lequel Y est un groupe acide boronique.

6. Composé selon la revendication 1, dans lequel Y est un groupe ester boronate choisi parmi les options (a) à (g) ci-dessous dans lesquelles le substituant R, quand il est présent, est choisi dans l'ensemble constitué par méthyle, éthyle, propyle, isopropyle, butyle, isobutyle, *tert*-butyle et phényle.

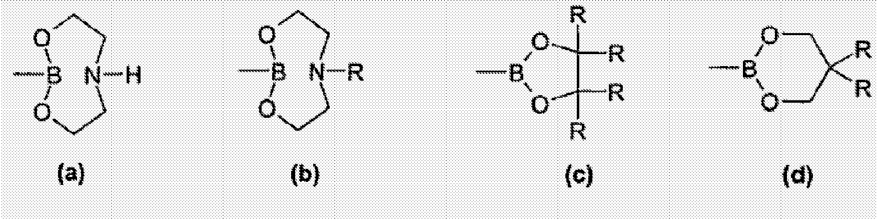

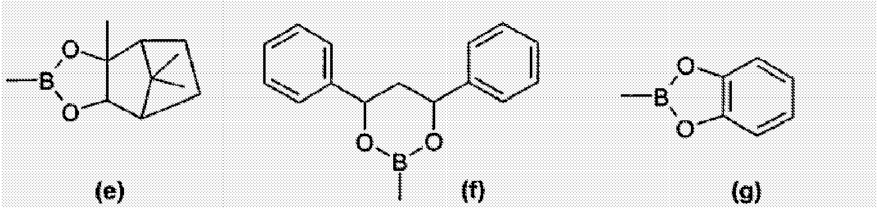

7. Procédé pour obtenir un composé de formule (I), qui comprend les étapes suivantes :
a) réaction d'un composé de formule (II) : 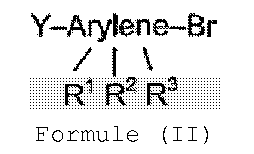 dans laquelle R¹, R², R³ et Y sont tels que définis dans la revendication 1, dans un solvant inerte à une température inférieure à -75°C avec du butyl-lithium pour former un intermédiaire lithié de formule (III) : 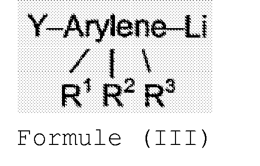
b) addition de dioxyde de soufre à l'intermédiaire lithié de formule (III) pour former le sulfinate de lithium correspondant de formule (IV) : 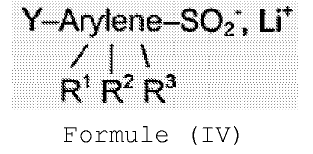 et conversion du sulfinate de lithium de formule (IV) en le chlorure de sulfonyle correspondant de formule (I) par traitement du sulfinate de lithium avec du N-chlorosuccinimide ou de la 1,3-dichloro-5,5-diméthylhydantoïne ou conversion du sulfinate de lithium de formule (IV) en le bromure de sulfonyle correspondant de formule (I) par traitement du sulfinate de lithium avec du *N*-bromosuccinimide ; ou
c) addition de trioxyde de soufre à l'intermédiaire lithié de formule (III) pour former le sulfonate de lithium correspondant de formule (V) : 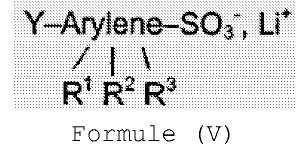 et conversion du sulfonate de lithium de formule (V) en le fluorure de sulfonyle correspondant de formule (I) par traitement du sulfonate de lithium avec du tétrafluorure de soufre ou du trifluorure de diéthylamino-soufre ou en le chlorure de sulfonyle correspondant de formule (I) par traitement du sulfonate de lithium avec du chlorure de thionyle, du chlorure de sulfuryle, du trichlorure de phosphore, du pentachlorure de phosphore ou de l'oxychlorure de phosphore.

8. Procédé selon la revendication 7, dans lequel le solvant inerte utilisé dans l'étape a) est choisi dans l'ensemble de solvants comprenant le tétrahydrofurane, le diéthyléther, le dioxane en mélange avec un solvant ayant un bas point de congélation, le diglyme, le *tert*-butylméthyléther, le di-tert-butyléther, le tétrahydropyrane, et leurs mélanges.

9. Procédé selon la revendication 7, dans lequel la température à laquelle est mise en oeuvre l'étape a) est comprise entre -75°C et -150°C.

10. Procédé selon la revendication 7, dans lequel un sulfinate de lithium de formule (IV) est converti en le fluorure de sulfonyle correspondant de formule (I) par traitement du sulfinate de lithium avec du tétrafluorure de soufre ou du trifluorure de diéthylamino-soufre.

11. Procédé selon la revendication 7, dans lequel un sulfinate de lithium de formule (IV) est converti en le chlorure de sulfonyle correspondant de formule (I) par traitement du sulfinate de lithium avec du N-chlorosuccinimide ou de la 1,3-dichloro-5,5-diméthylhydantoïne.

12. Procédé selon la revendication 7, dans lequel un sulfonate de lithium de formule (V) est converti en le chlorure de sulfonyle correspondant de formule (I) par traitement du sulfonate de lithium de formule (V) avec du chlorure de thionyle, du chlorure de sulfuryle, du trichlorure de phosphore, du pentachlorure de phosphore ou de l'oxychlorure de phosphore.

13. Procédé selon la revendication 7, dans lequel un sulfinate de lithium de formule (IV) est converti en le bromure de sulfonyle correspondant de formule (I) par traitement du sulfinate de lithium avec du N-bromosuccinimide.

14. Utilisation d'un composé de formule (I) dans la préparation d'un sulfonamide.

15. Utilisation d'un sulfonamide de la revendication 14 dans une réaction de couplage de Suzuki avec formation d'un biaryle.
